Europäisches Patentamt

European Patent Office

Office européen des brevets

(11) Veröffentlichungsnummer: **0 319 882**
**A1**

## EUROPÄISCHE PATENTANMELDUNG

(21) Anmeldenummer: **88120239.4**

(22) Anmeldetag: **03.12.88**

(51) Int. Cl.⁴: **F16L 41/04**

(30) Priorität: **11.12.87 DE 3742018**

(43) Veröffentlichungstag der Anmeldung:
**14.06.89 Patentblatt 89/24**

(84) Benannte Vertragsstaaten:
**AT BE CH DE ES FR GB IT LI LU NL SE**

(71) Anmelder: MANIBS Spezialarmaturen GmbH & Co. KG
Lempstrasse 24
D-5630 Remscheid 16 (Bliedinghausen)(DE)

(72) Erfinder: **Servé, Klaus**
Elberfelder Strasse 39
D-5608 Radevormwald(DE)

(74) Vertreter: **Mentzel, Norbert, Dipl.-Phys. et al**
Patentanwälte Dipl.-Phys. Buse Dipl.-Phys.
Mentzel Dipl.-Ing. Ludewig Unterdörnen 114
D-5600 Wuppertal 2(DE)

(54) **Vorrichtung zur Behandlung, insbesondere zum Anbohren, von unter Mediendruck stehenden Rohrleitungen, wie Gas- oder Wasserleitungen.**

(57) Bei einer Vorrichtung zur Behandlung von unter Mediendruck stehenden Rohrleitungen, wie Gas- oder Wasserleitungen, werden z.B. Bohrwerkzeuge benutzt, die über einen Halter an einem Rohrstutzen (10) befestigt werden, der an der zu behandelnden Rohrleitung sitzt. Um die Montagearbeiten leichter und schneller durchzuführen, wird vorgeschlagen, die Halterung aus einer zweiteiligen Kapsel (20) zu bilden, deren Unterteil (21) unverdrehbar an dem Rohrstutzen angekuppelt wird und deren Oberteil (22) dazu exzentrisch drehgelagert ist. Auf einem konzentrisch zur Drehachse liegenden Kreis ist der Kapseloberteil mit einem Satz von Montagewerkzeugen bestückt, zu denen auch ein Bohrgerät gehören kann. Der Kapsel-Oberteil ist mit seinen Montagewerkzeugen karussellartig zwischen jenen Drehlagen verstellbar, in denen das jeweilige Montagewerkzeug mit dem zu behandelnden Rohrstutzen ausgerichtet ist.

FIG.1

## Vorrichtung zur Behandlung, insbesondere zum Anbohren, von unter Mediendruck stehenden Rohrleitungen, wie Gas-oder Wasserleitungen

Die Erfindung richtet sich auf eine Vorrichtung der im Oberbegriff des Anspruches 1 angegebenen Art. Solche Vorrichtungen dienen dazu, um vorzugsweise in Betrieb befindliche Rohrleitungen beispielsweise mit Abzweigungen für Hausanschlüsse zu versehen oder mit Absperrschiebern auszurüsten. Es besteht auch das Bedürfnis, defekte Bauteile an der Rohrleitung zu entfernen, wie z.B. Absperrventile.

Wenn es darum geht, eine solche Rohrleitung mit einer Abzweigung auszurüsten, wird eine Anbohrvorrichtung benutzt. Dazu wird an der betreffenden Stelle der Rohrleitung ein Rohrstutzen mediendicht befestigt, was durch Schellen, Muffen, Schweißverbindungen od. dgl. geschehen kann. Bei der bekannten Vorrichtung wurde am Kopf des Rohrstutzens eine Schleuse angekuppelt, die zunächst zur Halterung des eigentlichen Bohrgerätes diente und mit einem Absperrschieber ausgerüstet war (DE-PS 28 30 966). Der Absperrschieber mußte abgestimmt mit der Bohrarbeit und den späteren Arbeitsgängen wirksam und unwirksam gesetzt werden, wie z.B. beim Anbringen und Lösen eines Blasensetzgerätes, eines Stopfensetzgerätes oder eines Ventilsetzgerätes an der Schleuse. Diese Arbeitsgänge und die Montagevorgänge der verschiedenen Geräte an der Schleuse sind umständliche und zeitaufwendige Vorgänge, die ein besonders geschultes Personal erfordern. In manchen Fällen kam es auch darauf an, das zu behandelnde Leitungsteilstück zur Versorgung der Verbraucher durch einen Bypass zu umgehen, weshalb man dafür zusätzliche Anbohrvorgänge an der Rohrleitung vorsehen mußte.

Der Erfindung liegt die Aufgabe zugrunde, eine Vorrichtung der im Oberbegriff des Anspruches 1 genannten Art zu entwickeln, die eine leichtere und schneller auszuführende Behandlung der mit Rohrstutzen ausgerüsteten Rohrleitungen gestattet, die auch von ungeschultem Personal bequem ausgeführt werden kann. Dies wird erfindungsgemäß durch die im Kennzeichen des Anspruches angeführten Maßnahmen erreicht, denen folgende besondere Bedeutung zukommt:

Bei der Erfindung wird ein ganzer Satz von Montagewerkzeugen zur Behandlung der Rohrleitungen an dem Oberteil einer Kapsel vorgesehen, deren Unterteil während der ganzen Behandlungszeit am Rohrstutzen der Leitung angekuppelt bleibt Das Innere der Kapsel steht dadurch ständig unter Mediendruck, weil aber die Werkzeuge mediendicht am Oberteil der Kapsel sitzen, bedarf es keines Absperrschiebers und dessen umständlicher Betätigung. Ebenso entfällt das bisher erforderliche Anbauen und Abbauen der verschiedenen Montagewerkzeuge, weil diese erfindungsgemäß durch eine karussellartige Drehung des Oberteils nacheinander in der gewünschten Reihenfolge in Ausrichtung mit dem Rohrstutzen gebracht und dort tätig gesetzt werden können. Der Oberteil mit seinen Montagewerkzeugen ist somit revolverartig bezüglich des im Unterteil fest angekuppelten Rohrstutzens drehbeweglich. Die jeweilige ausgerichtete Drehlage des Karussell-Oberteils bezüglich dem im Kapselunterteil sitzenden Rohrstutzen kann durch ein Gesperre erfolgen, dessen Aussehen und Wirkungsweise aus den Unteransprüchen 18 bis 20 näher zu ersehen ist.

Die Anbringung der verschiedenen Montagewerkzeuge an der Kapsel erfolgt am einfachsten durch die in Anspruch 2 erwähnten Maßnahmen, die jedoch in verschiedener Weise gemäß den Ansprüchen 3 bis 11 ausgeführt werden können, von denen jeder Anspruch ihre besonderen Vorteile mit sich bringt.

Insbesondere durch den im Kapselinneren wirksamen Mediendruck der Leitungen entstehen Axialkräfte, die eine leichtgängige Karussellbewegung der beiden Kapselteile erschweren würden. Deshalb empfiehlt es sich, die in den Ansprüchen 12 bis 16 angeführten Lagermittel zu verwenden.

Um eine stabile und doch schnell auszuführende Verbindung zwischen der Kapsel und dem Anbohrstutzen zu erreichen, sollte man die in Anspruch 17 angeführte Schnellverbindung verwenden. Weitere Maßnahmen und Vorteile der Erfindung ergeben sich aus den Zeichnungen und der nachfolgenden Beschreibung. Die Erfindung richtet sich dabei auf alle daraus entnehmbaren neuen Merkmale und Merkmalskombinationen, auch wenn diese nicht ausdrücklich in den Ansprüchen angeführt sein sollten. In den Zeichnungen ist die Erfindung in mehreren Ausführungsbeispielen dargestellt. Es zeigen:

Fig. 1 einen Axialschnitt durch die maßgeblichen Teile der erfindungsgemäßen Vorrichtung nach ihrem Anschluß an der zu behandelnden Stelle der Rohrleitung unter Weglassung der zugehörigen Werkzeuge,

Fig. 2, im Ausbruch, eine Teilansicht der in Fig. 1 gezeigten Vorrichtung an jener Stelle, wo als Werkzeug ein Bohrgerät angebracht ist,

Fig. 3, 4 und 5 entsprechende axiale Teilansichten der Vorrichtung mit als Blasensetzgerät. als Stopfensetzgerät bzw. als Bypass-Leitungsanschluß ausgebildeten Werkzeugen,

Fig. 6 eine Schnittansicht der Vorrichtung von Fig. 1 mit einem Ausbruch längs der dortigen Schnittlinie VI-VI unter Weglassung der daran befestigten Montagewerkzeuge,

Fig. 7 und 8 eine alternative Ausbildung der erfindungsgemäßen Vorrichtung vor ihrer Kupplung an einem entsprechenden Rohrstutzen und mit vier weiteren Werkzeugen zur Behandlung des Rohrstutzens bzw. der damit ausgerüsteten Leitung.

Die erfindungsgemäße Vorrichtung besteht aus zwei kuppelbaren Stücken, nämlich einem Rohrstutzen 10 und einer Kapsel 20. Der Rohrstutzen 10 ist hier als sogenanntes T-Stück mit einem Abzweigrohr 12 ausgebildet und besitzt an seinem oberen Ende einen besonders gestalteten Kopf 13, der längs seines Außenumfangs mit einer Schar von verteilt angeordneten Radialaussparungen 14 versehen ist, für die noch näher zu beschreibende Kupplung und mit einem Innengewinde 15 versehen ist. Der Rohrstutzen 10 wird mit seinem unteren Ende an jener Stelle 16 einer Rohrleitung 11 befestigt, die angebohrt werden soll. Im dargestellten Ausführungsbeispiel ist der Rohrstutzen 10 über eine Schweißverbindung 17 mit der Rohrleitung 11 verbunden, doch könnten genauso gut andere an sich bekannte Befestigungsmethoden verwendet werden, wie z.B. Befestigungsschellen.

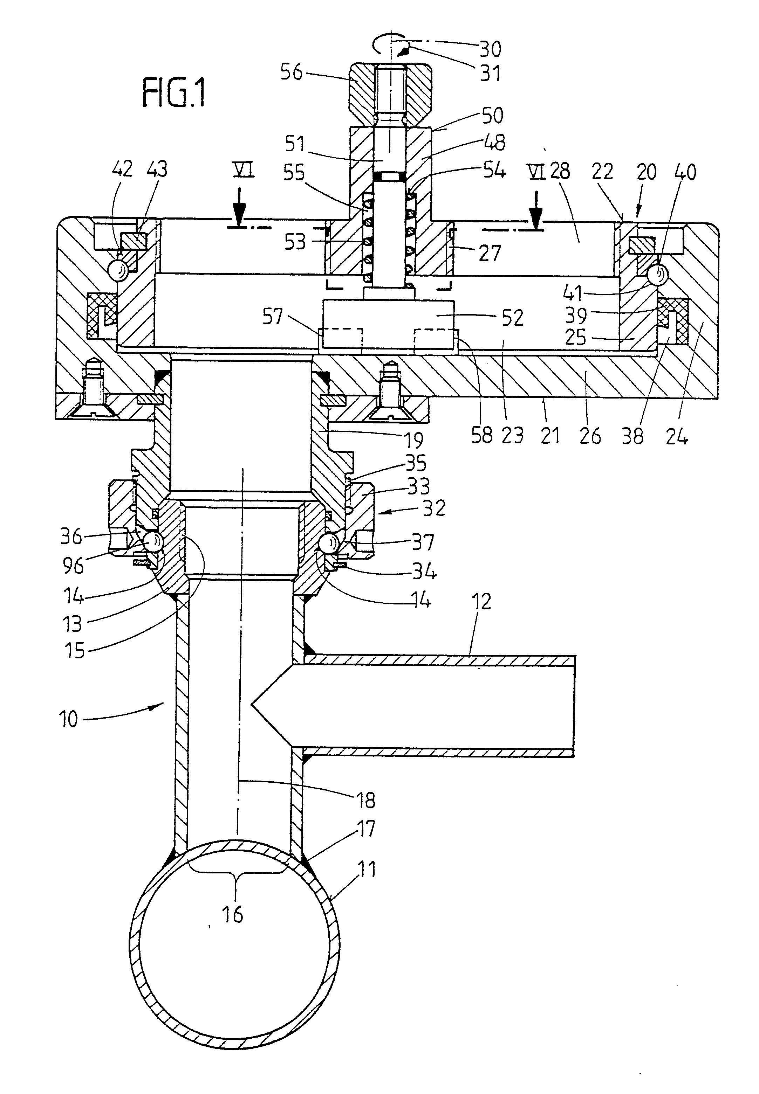

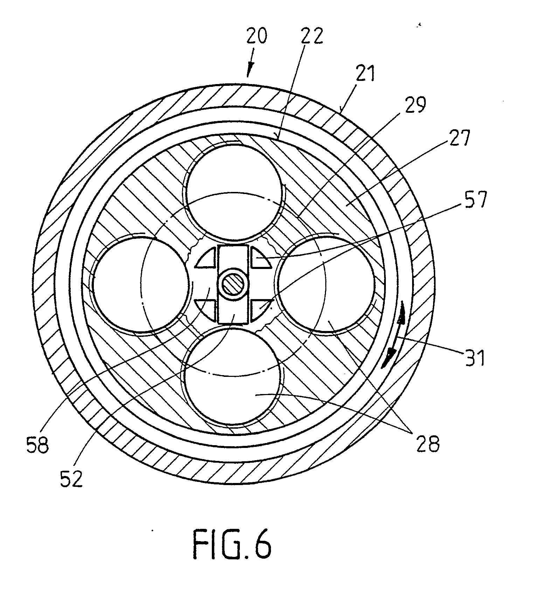

Die Kapsel 20 ist zweiteilig ausgebildet und besteht aus einem Unterteil 21 und einem Oberteil 22, die zwischen sich im fertiggestellten Zustand einen Kapselinnenraum 23 einschließen. Die beiden Teile 21, 22 bestehen aus zwei drehbar ineinandergefügten Zylindern 24, 25, die einerseits eine Unterplatte 26 und andererseits eine Oberplatte 27 aufweisen und exzentrisch zu 10, um die in Fig. 1 strichpunktiert angedeutete Drehachse 30 gegeneinander verdrehbar sind. Das ist durch den Drehpfeil 31 der Fig. 1 und 6 veranschaulicht. In dem in Fig. 1 gezeigten Betriebsfall ist der Kapsel-Unterteil 21 zwar unverdrehbar, aber schnell lösbar durch eine besondere Kupplung 32 am Rohrstutzen 10 angebracht.

Diese Kupplung 32 umfaßt ein Muffenrohr 19, das in einem exzentrisch zur Drehachse 30 angeordneten Durchbruch der Unterplatte 26 mediendicht befestigt ist. Das Muffenrohr 19 nimmt den beschriebenen Kopf 13 des Rohrstutzens 10 im Kupplungsfall auf, der sich dort über Innenschultern und Umfangsdichtungen mediendicht abstützt. Eine Überwurfmutter 33 ist am Muffenrohr 19 durch einen Sprengring 34 unverlierbar positioniert und auf ein dort befindliches Außengewinde 35 aufschraubbar. Das Muffenrohr 19 besitzt in Ausrichtung mit den erwähnten Radialaussparungen 14 im Kopf 13 eine Schar von Radialdurchbrüchen 36, worin als Klemmkörper dienende Kugeln 96 sitzen, die beim Aufschrauben der Mutter 33 durch einen Innenkonus 37 an der Überwurfmutter 33 in die Radialaussparungen 14 eingedrückt werden. Dadurch ist der Unterteil 21 der Kapsel 20 torsionsfest mit dem Anbohrstutzen 10 verbunden.

Der Oberteil 22 der Kapsel 20 ist mit einer Schar von Aufnahmen 28 versehen, die hier aus zueinander gleich dimensionierten Gewindebohrungen bestehen. Die Bohrungen 28 sind, wie aus Fig. 6 hervorgeht, auf einem konzentrisch zur Drehachse 30 liegenden Kreis 29 angeordnet, wobei der Kreisradius die oben erwähnte Exzentrizität der strichpunktiert in Fig. 1 angedeuteten Längsmittellinie 18 des Anbohrstutzens 10 bezüglich der Drehachse 30 bestimmt. Zwischen den beiden ineinandergreifenden Zylindern 24, 25 der beiden Kapsel-Teile 21, 22 befindet sich in einer Innenrinne 38 eine umlaufende Lippendichtung 39, die für eine Gasdichtigkeit der gegeneinander verdrehbaren Kapsel-Teile 21, 22 sorgt. Außerdem ist im Fugenbereich der beiden Zylinder 24, 25 eine Laufrinne 41 für einen Kugelkranz 40 vorgesehen, der die Aufgabe hat, die durch den Gasdruck im Kapselinneren 23 entstehenden Axialkräfte zu übertragen. Dadurch ist die Drehung 31 des Oberteils 22 leichtgängig gegenüber dem Unterteil 21. Der Kugelkranz 40 ist durch einen Deckring 42 in der Laufrinne 41 gehalten und dieser durch einen Sprengring 43 gesichert.

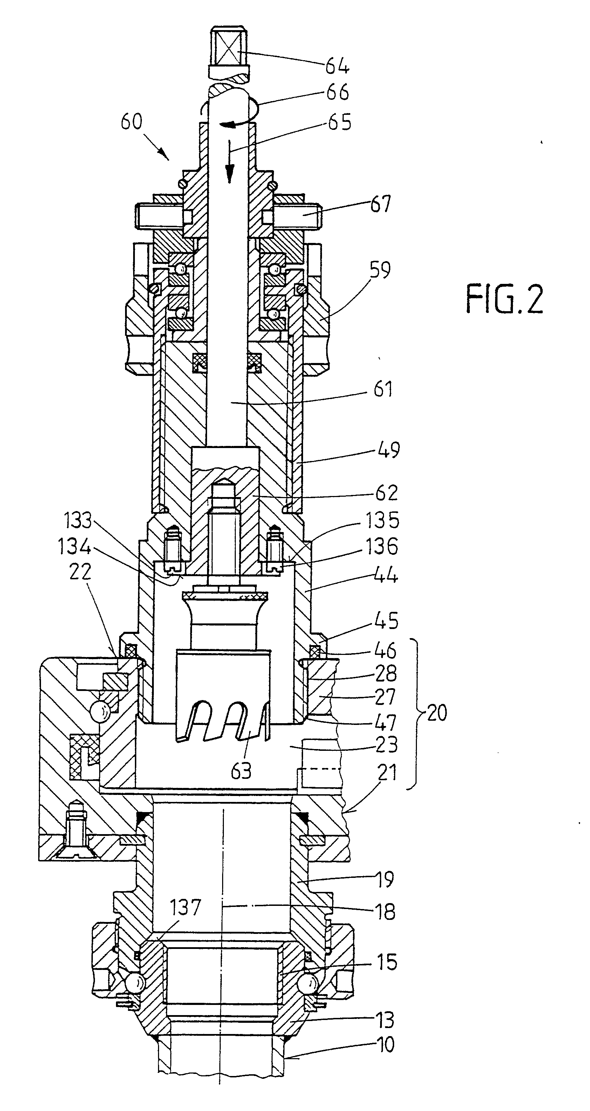

Wie am besten aus Fig. 6 zu erkennen ist, sind in der Oberplatte 27 mehrere Gewindebohrungen 28 vorgesehen, die zur Aufnahme von allen montagenötigen Werkzeugen dienen, deren Aussehen aus den nachfolgenden Fig. 2 bis 5 zu ersehen ist. Diese Werkzeuge sind mit einem rohrförmigen Gehäuse, wie für ein Anbohrgerät 60 in Fig. 2 bei 44 gezeigt ist, mediendicht verschlossen. Die Gehäuse 44 sind mit einem radial nach außen weisenden Bund 45 versehen, der eine Ringdichtung 46 trägt und sich mit dieser auf der Oberplatte 27 abstützt, während das im davor liegenden Endabschnitt befindliche Außengewinde 47 in der Gewindebohrung 28 festgeschraubt ist. Der Kapsel-Oberteil 22 wird beim Drehen 31 in jenen Drehlagen durch ein Gesperre 50 festgehalten, in denen die einzelnen Werkzeuge axial mit der bereits erwähnten Längsmittellinie 18 des zu behandelnden Anbohrstutzens 10 ausgerichtet sind.

Das Gesperre 50 ist, wie aus Fig. 1 und 6 hervorgeht, im Bereich der Drehachse 30 angeordnet und umfaßt im Oberteil 22 eine Längsführung 48 für einen darin abgedichtet unverdrehbar aufgenommenen Stößel 51. Das Ende des Stößels ragt heraus und ist, z.B. durch Schraubverbindung, mit einem Handgriff 56 versehen, der es gestattet, den Stößel 51 gegen die Wirkung einer Wendelfeder 53 um ein begrenztes Stück herauszuziehen. Die Feder 53 stützt sich einendig an einer Innenschulter 54 der abgesetzten, zur Aufnahme des Stößels 51

dierenden Bohrung 55 ab und drückt anderendig auf eine am Stirnende des Stößels 51 angeordnete Querrippe 52. Die Querrippe 52 ist die eine Schließhälfte des Gesperres 50.

Die andere Schließhälfte besteht, wie am besten aus Fig. 6 zu erkennen ist, aus einem Satz von Segmenten 57, die zwischen sich Nuten 58 einschließen. Die Nuten 58 dienen zur wahlweisen Aufnahme der Querrippe 52 im eingefahrenen Zustand des Stößels 51. Dann liegt die gesicherte ausgerichtete Drehlage des Kapsel-Oberteils 22 mit einem bestimmten Werkzeug gegenüber dem Rohrstutzen 10 vor. Um den Kapsel-Oberteil 22 karussellartig bis zum nächsten Werkzeug weiterdrehen zu können, wird, wie bereits erwähnt wurde, über den Handgriff 56 die Querrippe 52 aus der sie aufnehmenden Nut 58 kurzzeitig herausgehoben. Die Rückstellfeder 53 läßt die Querrippe 52 dann in die nachfolgende Nut 58 beim Weiterdrehen 31 einrasten.

In Fig. 2 ist eine erste ausgerichtete Drehlage des Kapsel-Oberteils 22 gezeigt, wo das bereits erwähnte Anbohrgerät 60 mit dem Rohrstutzen 10 genau fluchtet. Das Anbohrgerät 60 hat dabei einen Aufbau, wie er in der DE-OS 37 25 240 beschrieben ist, deren Inhalt zum Gegenstand dieser Patentanmeldung gemacht wird. Das Gehäuse 44 steht in Gewindeeingriff mit einer ergänzenden Außenhülse 49, auf der ein Kupplungsring 59 sitzt. Die Gehäuseteile 44, 49 werden von einer Bohrstange 61 axial durchsetzt, die dort in einer Gleitführung 62 mediendicht durchgeführt ist. Am Unterende der Bohrstange 61 sitzt ein Spannfutter 62 zur lösbaren Verbindung eines Schneidwerkzeugs 63. Am Oberende der Bohrstange 61 befindet sich ein Schlüsselansatz 64 für ein nicht näher gezeigtes Drehwerkzeug.

Zunächst wird die Bohrstange 61 im Sinne des Pfeils 65 eingeschoben, wobei das Schneidwerkzeug 63 durch den Kapsel-Innenraum 23 hindurch in den Rohrstutzen 10 gelangt und dort bis zur Anbohrstelle 16 an der Rohrleitung 11 geführt wird. Dann wird die Bohrstange 61 im Sinne des Pfeils 66 in Rotation versetzt. Diese kann zugleich als Vorschub für den Bohrfortschritt nutzbar gemacht werden, wenn man Klemmschrauben 67 festzieht, den drehfest auf der Außenhülse 49 längsverschieblichen Kupplungsring 59 mit den Klemmschrauben 67 in Eingriff bringt und die Bohrstange 61 in Rotation 66 versetzt, denn dann werden die beiden in Eingriff stehenden Gewindegänge zwischen dem Gehäuse 44 und der Außenhülse 49 wirksam.

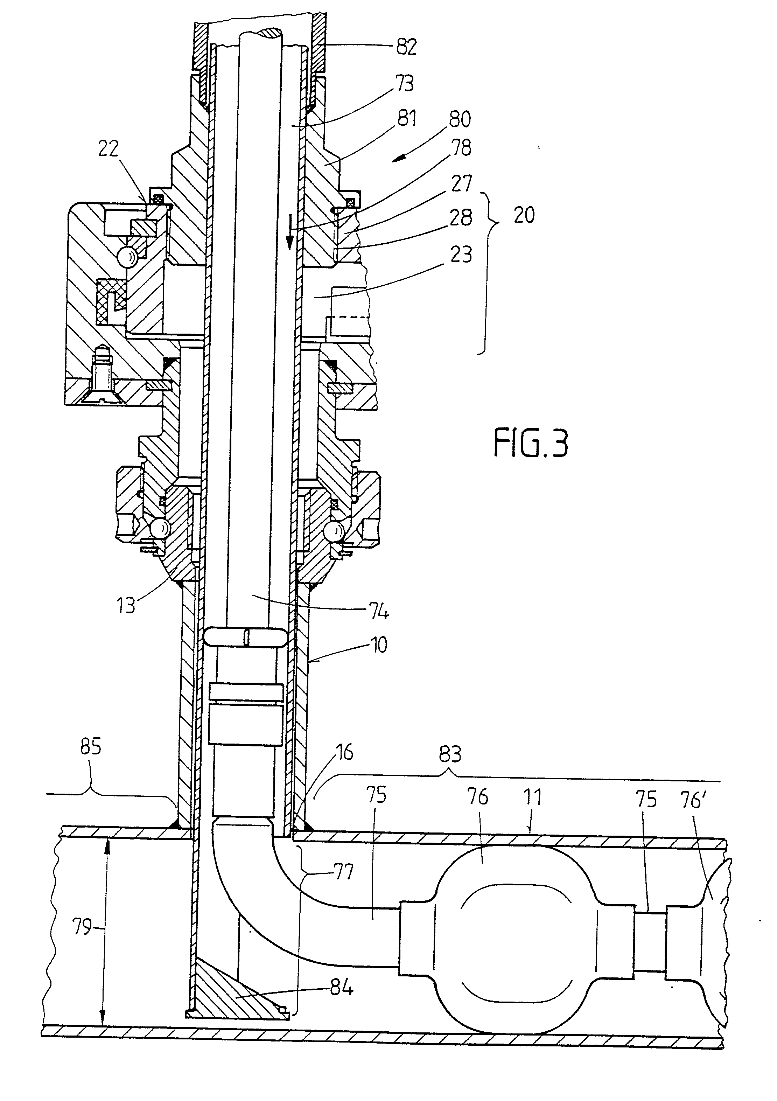

Ist die Rohrleitung 11 bei 16 mit dem Schneidwerkzeug 63 durchgebohrt worden, so wird der ausgeschnittene Wandteil zweckmäßigerweise in der Rohraufnahme des Schneidwerkzeugs 63 festgehalten. Die Bohrstange 61 wird axial zurückgeführt, bis das Schneidwerkzeug 63 in seine in den Kapselinnenraum 23 zurückbewegte Position von Fig. 2 gebracht worden ist. Dann wird der Oberteil 22 der Kapsel 20 um ein Werkzeug weiterbewegt, das beispielsweise aus dem aus Fig. 3 ersichtlichen Blasensetzgerät besteht. Währenddessen ist aber, unabhängig von der Drehlage, die aus Fig. 5 ersichtliche Bypass-Leitung wirksam, die folgendes Aussehen und folgende Wirkungsweise hat:

In einer der Gewindebohrungen 28 des Kapsel-Oberteils 22 sitzt ein Gehäuseabschluß 68 mit einer Zentralbohrung zur mediendichten Aufnahme eines Anschlußstücks 69, das mit einer an einer Bypass-Leitung 70 angebrachten Schnellkupplung 71 zusammenwirkt. Das Anschlußstück 69 ist mit Ringaufnahmen 72 für kugelförmige Halteelemente od. dgl. im Inneren der Schnellkupplung 71 vorgesehen. Nachdem durch das vorausgehende Bohren die Rohrleitung 11 das Medium ins Innere des Rohrstutzens 10 gelangen läßt, füllt dieses schließlich auch den Kapselinnenraum 23 aus. Über die angeschlossene Bypass-Leitung 70 kann daher das Medium zu einer analogen Anschlußstelle in einem entfernteren Stück der Rohrleitung geleitet werden, weshalb die dahinterliegenden Verbraucher mit dem Medium weiter versorgt werden können, währenddessen das bereits erwähnte, aus Fig. 3 ersichtliche Blasensetzgerät 80 seine Wirksamkeit am Rohrstutzen 10 entfalten kann.

Fig. 3 zeigt die ausgerichtete Drehlage des Blasensetzgeräts 80 in der Kapsel 20, wo das eine Teilstück 83 der Rohrleitung 11 mediendicht abgeschlossen werden kann, während über den Anbohrstutzen 10 das in dem davorliegenden Abschnitt der Rohrleitung 11 kommende Medium über die vorbeschriebene Bypass-Leitung 70 weiter zum Verbraucher fließen kann. Das Blasensetzgerät 30 hat einen Aufbau, wie aus der DE-OS 31 45 284 zu ersehen ist, deren Inhalt zum Gegenstand der vorliegenden Anmeldung gemacht wird.

In einer weiteren der vorgeschriebenen Gewindebohrungen 28 der Kapsel-Oberplatte 27 sitzt ein Gewindetopf 81 mit einem Schutzrohr 82, worin ein Blasenaufnahmerohr 73 längsverschieblich angeordnet ist. Darin befindet sich eine Rohrstange 74, die in ein flexibles Führungsrohr 75 übergeht und worin dann eine Druckluftleitung hindurchgeführt ist, die im Bereich von um das Führungsrohr 75 herumgelegten Blasen 76, 76' Luftausmündungen hat. Im Ausgangszustand befindet sich auch das Führungsrohr 75 mit seinen Blasen 76, 76' im Inneren des Blasenaufnahmerohrs 73.

In der Ausgangsstellung des Blasensetzgeräts 80 befindet sich das mit dem aus Fig. 3 ersichtlichen seitlichen Ausbruch 77 versehene Ende des Blasenaufnahmerohrs 73 zunächst im Kammerinneren 23. Dann, in ausgerichteter Position wird das Blasenaufnahmerohr 73 im Sinne des Pfeils 78 zusammen mit seinem Inhalt axial eingeschoben bis zu der in Fig. 3 ersichtlichen Stellung, wo der Ausbruch 77 ins Rohrinnere 79 der zu behandelnden Rohrleitung 11 gebracht ist. Der Rohrausbruch 77 weist dabei in das abzusperrende Rohrteilstück 83 von Fig. 3, weshalb beim nachfolgenden Ausfahren der Rohrstange 74 über eine geneigte Schrägfläche 84 das Führungsrohr 75 mit seinen Blasen 76, 76' in dieses Rohrteilstück 83 umgelenkt wird. Dann werden die beiden Blasen 76, 76' über die nicht näher gezeigte Druckluftleitung im Inneren des Führungsrohrs 75 aufgebläht, bis sie das Rohrinnere 79 der Rohrleitung 11 abschließen. Währenddessen kann, wie bereits beschrieben wurde, aus dem davorliegenden freibleibenden Rohrteilstück 85 das Medium ins abgeschlossene Kapselinnere 23 gelangen und dort über die erwähnte Bypass-Leitung 70 abfließen.

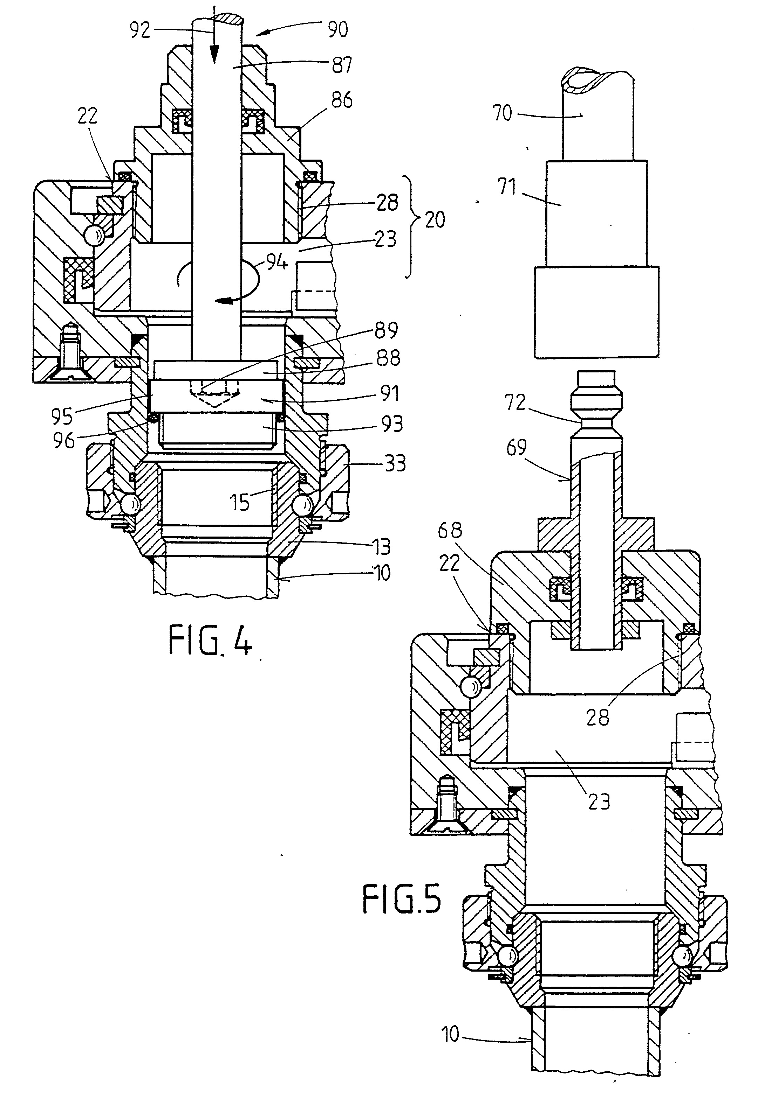

In einer weiteren Gewinde-Aufnahme 28 ist die Führungsbüchse eines Stopfensetzgeräts 90 im Gewindeeingriff und kann schließlich in eine entsprechende, aus Fig. 4 ersichtliche, ausgerichtete Drehlage bezüglich des Rohrstutzen 10 gebracht werden. Dieses Gerät 90 hat folgendes Aussehen und nachgenannte Funktionen:

Die Führungsbüchse 86 dient zur längsverschieblichen Führung einer Betätigungsstange 87, an deren innerem Ende ein Stopfenhalter 88 sitzt, der hier aus einem Magneten gebildet ist. An der Stirnfläche des Magneten 88 sitzt ein Außensechskant 89, der mit einem komplementären Innensechskant eines aus Fig. 4 ersichtlichen Stopfens 91 im Kupplungsfall in Eingriff kommt. Der Stopfen 91 besteht aus magnetisierbarem Werkstoff, der durch magnetische Kraft folglich vom Magneten 88 in Kupplungsposition mit der Betätigungsstange 87 gehalten wird.

In der genannten ausgerichteten Drehlage des Kapsel-Oberteils 22 befindet sich die Betätigungsstange 87 fluchtend mit dem Rohrstutzen 10 und kann die durch den Pfeil 92 verdeutlichte Einfahrbewegung ausführen. Der Stopfen 91 wird dann aus einer ursprünglich im Kammerinneren 23 befindlichen Position gegen den Kopf 13 des Rohrstutzens 10 bewegt. Der Stopfen 91 besitzt ein abgesetztes mit Außengewinde versehenes Gewindestück 93, das bei dieser Einfahrbewegung 92 schließlich auf das bereits eingangs erwähnten Innengewinde 15 im Stutzenkopf 13 trifft. Dann wird die Betätigungsstange 87, wie durch den Rotationspfeil 93 verdeutlicht, mittels eines am äußeren Stangenende angreifenden Drehwerkzeugs in Umdrehung versetzt, wodurch sich das Gewindestück 93 in den Stutzenkopf 13 festschraubt. An der Übergangsstelle des Gewindestücks 93 zu einem endseitigen Stopfenflansch 95 befindet sich eine Ringdichtung 96.

Der festgeschraubte Stopfen 91 schließt den Rohrstutzen 10 mediendicht ab. Die Kapsel kann nun wieder durch Rückdrehen der Überwurfmutter 33 vom Stutzenkopf 13 entkuppelt werden und an einer anderen Stelle für Montagearbeiten an Rohrleitungen genutzt werden.

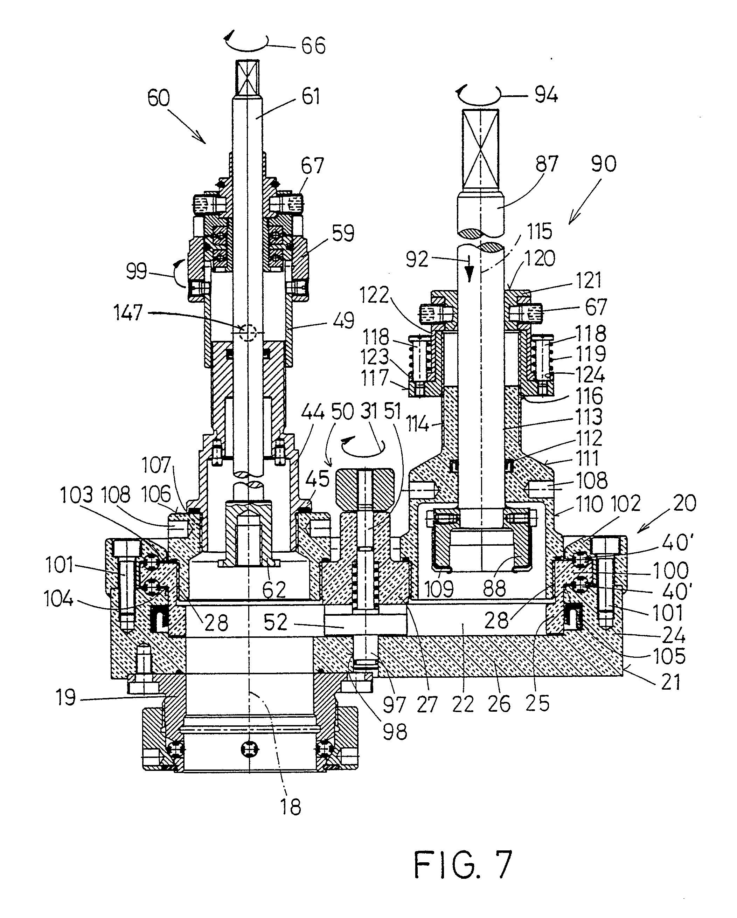

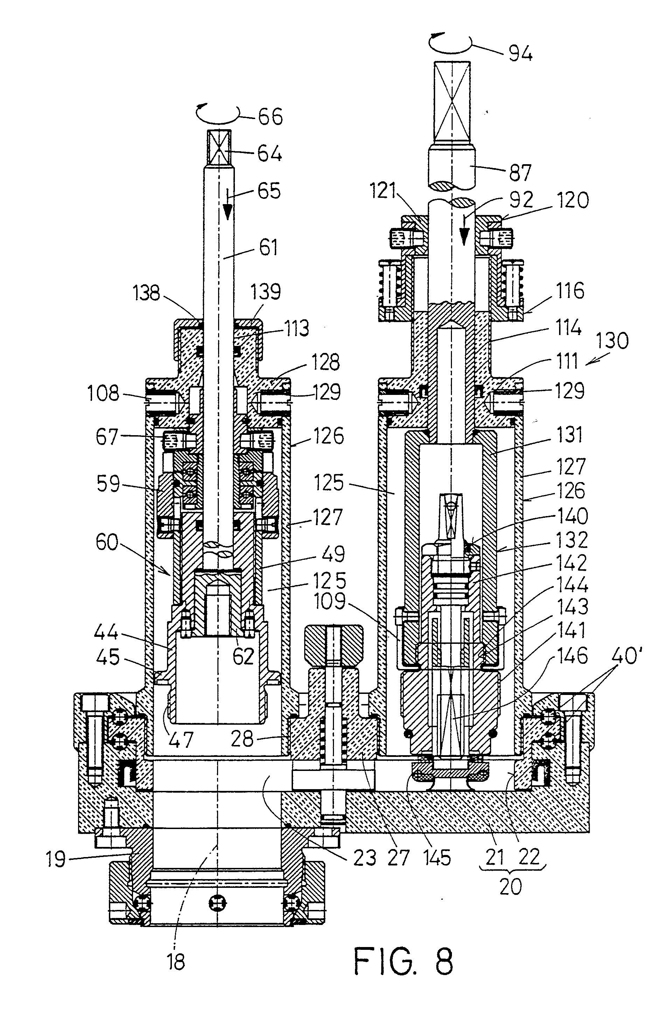

Die in Fig. 7 und 8 gezeigte Vorrichtung zeigt eine Alternative zu der in den vorausgehenden Fig. beschriebenen Type und ist vor ihrer Kupplung an einem Rohrstutzen 10 dargestellt. Trotz abweichender Form sind zur Benennung entsprechender Bauteile die gleichen Bezugszeichen wie im vorausgehenden Ausführungsbeispiel gemäß Fig. 1 bis 6 verwendet, weshalb insoweit die bisherige Beschreibung gilt. Es genügt, lediglich auf die Unterschiede einzugehen. Die Schraffur der Bauteile im Axialschnitt gibt die Werkstoffauswahl gemäß der DIN-Norm bei der vorliegenden Erfindung wieder.

Ein Unterschied besteht in der Ausbildung der Kapsel 20 gemäß Fig. 7. Der Zylinder 25 ihres Oberteils 22 ist an seinem oberen Ende mit einem nach außen weisenden Flansch 100 versehen, der etwa im Höhenbereich der Oberplatte 27 angeordnet ist. Die Zylinderwand 24 des Kapsel-Unterteils 21 ist an ihrem oberen Stirnende verbreitert, um über Schraubbolzen 101 od. dgl. einen Gegenflansch 102 auf der Außenfläche 103 des Flansches 100 zu positionieren, während die Innenfläche 104 des Flansches 100 der stirnseitigen Axialfläche 105 des Unterteil-Zylinders 24 gegenüberliegt. In diesem Fall sind zwei Sätze von Kugeln 40 einerseits zwischen Flansch 100 und Gegenflansch 102 und andererseits zwischen Flansch 100 und der Axialfläche 105 angeordnet, was für eine leichtgängige Drehung 31 des Karussell-Oberteils 22 auch dann sorgt, wenn der Kapselinnenraum 23 sehr hohem Mediendruck ausgesetzt ist.

Eine weitere Abweichung gegenüber der in Fig. 1 und 6 verdeutlichten Vorrichtung besteht darin, daß, gemäß Fig. 7, der Stößel 51 des Gesperres 50 über die dortige Schließhälfte 52 hinaus eine axiale Verlängerung 97 aufweist, die in einer Axialbohrung 98 der Kapsel-Unterplatte 26 drehbar und axilverschiebbar unter Verwendung von Dichtungsringen geführt ist.

Die in Fig. 6 erläuterten Gewindebohrungen 28 in der oberen Karussellplatte 27 sind im Ausführungsbeispiel von Fig. 7 mit einem größeren Bohrungsdurchmesser versehen, weshalb in der Gewindebohrung 28 zunächst ein Zwischenring 106 eingeschraubt ist, der seinerseits ein Ringinnengewinde 107 zur Aufnahme des bereits im Zusammenhang mit Fig. 2 beschriebenen Anbohrgeräts 60 besitzt. Das Bohrgehäuse 44 stützt sich mit seinem Flansch 45 auf der oberen Stirnfläche des Zwischenrings 106 ab. Der Zwischenring 106 ist mit Radialöffnungen 108 zum Angriff von Drehwerkzeugen, wie Steckstiften vorgesehen, um den Zwischenring 106 in die Gewindebohrung 28 der Karussellplatte 27 mediendicht festzuschrauben. Die weitere Betätigung des Anbohrgeräts 60, wenn sich dieses in Ausrichtung mit der Anschlußstelle 19 für den im vorhergehenden Ausführungsbeispiel dargestellten Rohrstutzen 10 befindet, erfolgt in der bereits im Zusammenhang mit Fig. 2 erläuterten Weise. Dabei kann der Kupplungsring 59 des Bohrgeräts 60 auch in der aus Fig. 7 ersichtlichen entkuppelten Lage zu den Klemmschrauben 67 verbleiben und durch eine Drehung 99 im Sinne des aus Fig. 7 ersichtlichen Pfeils 99 einen eigenständigen Bohrvorschub durch Auseinanderschrauben der Außenhülse 49 gegenüber dem Bohrgehäuse 44 hervorrufen, während die Bohrstange 61 demgegenüber eine selbständige Rotation 66 erfährt. Die Klemmschrauben 67 bleiben auch dabei angezogen. Die Unabhängigkeit ergibt sich durch die zwar axialfeste aber drehbare Verbindung an der mit Kugellagern ausgerüsteten Verbindungsstelle zwischen einer zu den Klemmschrauben 67 gehörenden Klemmbuchse einerseits und der Gehäuse-Außenhülse 49 andererseits.

In der anderen Gewindebohrung 28 der Kapsel 20 von Fig. 7 sitzt mediendicht eine Büchse 110, die ein gegenüber Fig. 4 alternatives Stopfensetzgerät 90 haltert. Hier besitzt der Stopfbuchsenhalter 88 radiale Federglieder 109, die, anstelle des in Fig. 4 beschriebenen Magneten, auf mechanischem Wege, in Form eines Schnappverschlusses, die gewünschte axiale Verbindung für den in Fig. 7 nicht näher gezeigten Stopfen erzeugen, der drehfest, aber axial ein- und aussteckbar mit seinem oberen Bereich ins Innere des Stopfenhalters 88 eingeführt ist. Wie schon in Fig. 4 beschrieben wurde, besitzt ein solcher Stopfen 91 ein dort beschriebenes Außengewinde 93, das durch Rotationsbewegung 94 der auch in Fig. 7 gezeigten Betätigungsstange 87 einen solchen Stopfen in das Innengewinde 15 des aus Fig. 4 ersichtlichen Rohrstutzens 10 einschraubt. Dazu ist beim Stopfensetzgerät 90 von Fig. 7 eine besondere Einrichtung vorgesehen.

Auch die Büchse 110 von Fig. 7 ist mit Radialöffnungen 108 versehen, deren Funktion bereits vorausgehend beim Zwischenring 106 beschrieben wurde. Der Büchsendeckel 111 besitzt zunächst eine durch Lippendichtungen 112 od. dgl. mediendichte Durchführung 113 für die Betätigungsstange 87, um welche herum ein koaxial zur strichpunktiert in Fig. 7 angedeuteten Stangenachse 115 verlaufendes Gewindestück 114 angeordnet ist. Dieses Gewindestück 114 mit Außengewinde steht in Eingriff mit dem Innengewinde einer darüber angeordneten Gewindehülse 116, die an ihrem unteren Stirnende einen umlaufenden Bund 117 trägt. Im Bund 117 sind, achsparallel zur Stangenachse 115, Bolzen 118 befestigt, die Druckfedern 119 tragen. Die Gewindesteigung zwischen dem Gewindestück 114 und der Gewindehülse 116 ist gleich der Gewindesteigung des vorerwähnten Innengewindes 15 im Kopf 14 des Rohrstutzens 10 und damit gleich der Gewindesteigung in dem aus Fig. 4 ersichtlichen Außengewinde 93 des zugehörigen Stopfens.

Zu der vorerwähnten Einrichtung gehört eine aus Fig. 7 ersichtliche lösbare Verbindung 120, die an der Betätigungsstange 87 angreift. Diese besteht hier aus einer Klemmbuchse 121, die über die bereits im Zusammenhang mit Fig. 2 beschriebenen Klemmschrauben 67 wahlweise eine sowohl drehfeste als auch axialfeste Verbindung zur Betätigungsstange 87 von Fig. 7 herstellt. Dazu ist die Klemmbuchse 121 längsgeschlitzt und über die Klemmschrauben 67 an der gewünschten Stelle der Betätigungsstange 87 festsetzbar. Die Klemmschrauben 67 haltern eine mit einem endseitigen Radialflansch 123 ausgerüstete Oberbuchse 122, die gleitfähig den Umfang der Gewindehülse 116 umschließt. Die Oberbuchse 122 ist stets drehfest und axialfest mit der Klemmbuchse 121 verbunden. Ihr Radialflansch 123 ist mit Durchbrüchen 124 versehen, aus welchem die im Bund 117 der Gewindehülse 116 sitzenden Bolzen 118 herausragen. Die an kopfartigen Verbreiterungen der Bolzen 118 sich einendig abstützenden Druckfedern 119 stützen sich anderendig an der Oberseite des Radialflansches 123 ab und sind somit bestrebt, die Oberbuchse 122 gegen den Gewindehülsen-Bund 117 axial angedrückt zu halten. Dies ist für den Montagevorgang des Stopfens in dem bereits mehrfach erwähnten Innengewinde 115 des Rohrstutzens 10 von Fig. 4 bedeutsam. Dazu ist, ausgehend von Fig. 7, jene andere Drehlage zu betrachten, wo die vorerwähnte Stangenachse 115 mit der ebenfalls strichpunktiert in Fig. 7 angedeuteten bereits eingangs beschriebenen Längsmittellinie 18 des in Fig. 7 nicht mit dargestellten Rohrstutzens 10 ausgerichtet ist.

In diesem Fall ist zunächst die Verbindung 120 zur Betätigungsstange 87 gelöst, indem die von den Klemmschrauben 67 ausgehende Klemmwirkung unwirksam ist. Dann wird, wie schon in Fig. 4 beschrieben wurde, die Betätigungsstange 87 im Sinne des dortigen Pfeils 92 axial eingefahren, bis der im Stopfenhalter 88 befindliche, in Fig. 7 nicht dargestellte Stopfen mit seinem Gewindestück 93 von Fig. 4 an das Innengewinde 15 des Rohrstutzens 10 anschlägt. Danach wird die Verbindung 120 festgesetzt, was durch Eindrehen der Klemmschrauben 67 bewirkt wird. Dann greift die Klemmbuchse 121 sowohl drehfest wie axialfest an der Betätigungsstange 87 an. Ihre bereits mehrfach erwähnte Rotation 94 wird von der Oberbuchse 122 auf die Gewindehülse 116 übertragen, weil die erwähnten Bolzen 118 einerseits und die Flansch-Durchbrüche 124 andererseits wie Drehmitnahmen wirken. Dadurch schraubt sich auch die Gewindehülse 116 auf das Gewindestück 114 der Büchse 110 auf. Gleichzeitig wird aber durch die Rotation 94 der Betätigungsstange 87 der Stopfen 91 bemüht sein, sich mit seinem Außengewinde 93 in das Innengewinde 15 des Rohrstutzens 10 einzudrehen, was aber normalerweise nicht sogleich möglich ist, weil die Gewinde 94 15 zunächst nicht in einer den Gewindeeinlauf ermöglichenden Ausgangsdrehlage sich befinden. Das führt zunächst dazu, daß zwar die Gewinde zwischen dem Gewindestück 114 und der Gewindehülse 116 sogleich sich ineinanderdrehen, aber das Entsprechende bei den Gewinden 91, 15 im Bereich des Stopfens 91 von Fig. 4 noch nicht geschieht. Dadurch eilt die Gewindehülse 116 gegenüber der Axialposition des Stopfens 91 axial vor. Es kommt folglich zu einem axialen Versatz zwischen der Lage des Stopfens im Stopfenhalter 88 an der Betätigungsstange 87 einerseits und dem Axialvorschub der Gewindehülse 115 auf der Büchse 110 andererseits. Dies ist aber trotz der nunmehr festen Verbindung 120 erfindungsgemäß unschädlich, weil dieser axiale Versatz sich durch ein nachgiebiges Zusammendrücken der Federn 119 kompensieren läßt. Während die Gewindehülse 116 mit ihrem Bund 117 bei dieser Rotation 94 sich axial nach unten schraubt, kann der axiale Rückstand der Betätigungsstange 87 sich in einem Lüften des an der Oberbuchse 122 vorgesehenen Radialflansches 123 auswirken. Im weiteren Zuge der Rotation 94 findet aber schließlich auch das Gewinde 93 des Stopfens 91 von Fig. 4 den Anfang im Innengewinde 15 des Rohrstutzens 10 und wird sich dann, wegen der erwähnten Abstimmung mit der Gewindesteigung der Bauteile 114, 116 sich dann gleichförmig zu der Schraubbewegung der Gewindehülse 116 in sein Innengewinde 15 des Rohrstutzens 10 eindrehen.

Diese Einrichtung kann aber zugleich dazu benutzt werden, um eingangs, bei dem beschriebenen Einfahren 92 der Betätigungsstange 87 eine gewisse Andruckkraft über die Federn 119 auf den am Kopf 13 des Rohrstutzens 10 auftreffenden Stopfen 91 auszuüben, was dann durch Eindrehen der Klemmschrauben 67 ein Festsetzen der Verbindung 120 an der Stange bewirkt. Dann steht gleich zu Beginn der Rotation 94 der Stopfen 91 unter einem gewissen Axialdruck, der für ein sicheres Ineinanderfahren der Gewinde 93, 15 im Stopfenbereich sorgt.

Fig. 8 zeigt die bereits in Fig. 7 beschriebene Vorrichtung, aber mit anderen bzw. anders montierten Montagewerkzeugen, nämlich einem Anbohrgerät 60 und einem Ventilsetzgerät 130. Es braucht lediglich auf die weiteren Maßnahmen eingegangen zu werden, die nicht bereits im Zusammenhang mit den vorausgehenden Fig. und insbesondere mit Fig. 7 beschrieben worden sind.

In der Darstellung von Fig. 8 befindet sich gerade das Anbohrgerät 60 mit seiner Längsmittellinie 18 in Ausrichtung mit dem Muffenrohr 19, in welches der nicht näher gezeigte Rohrstutzen im Kupplungsfall eingreift. Diese Verhältnisse ergeben sich aber erst, wenn die eigentliche Bohrarbeit ausgeführt worden ist, die, vorausgehend, in folgender Weise abläuft:

Auszugehen ist von dem im unteren Teil der Fig. 1 dargestellten Zustand, wo auf der Leitung 11 ein Rohrstutzen 10 durch Schweißen 17 od. dgl. befestigt ist und wo es darauf ankommt, die Bohrarbeit an der Rohrstelle 16 auszuführen. Die Kapsel 20 braucht zunächst nicht montiert zu sein. Es wird das bereits in Fig. 2 beschriebene Bohrgerät 60 unmittelbar am Kopf 13 des Rohrstutzens 10 dadurch befestigt, daß das Außengewinde 47 am Unterende des Bohrgehäuses 44 in das Innengewinde 15 des Stutzenkopfes 13 festgeschraubt wird. Dabei kommt der Gehäusebund 45 mit seiner Dichtung 46 mediendicht an der Stirnfläche 137 des Rohrstutzens 10 zur Anlage. Jetzt kann die Bohrarbeit ausgeführt werden, wie sie schon im Zusammenhang mit Fig. 2 bzw. 7 erläutert worden ist. Die Klemmschrauben 67 werden angezogen und damit eine axialfeste und drehfeste Verbindung zur Bohrstange 61 und dem Schneidwerkzeug 63 gemäß Fig. 2 hergestellt. Auch in Fig. 8 ist, ähnlich wie in Fig 7, das Schneidwerkzeug 63 nicht mit dargestellt, das im Spannfutter 62 sitzt und beim Bohren an der aus Fig. 1 ersichtlichen Anbohrstelle 16 wirkt. Wird der Kupplungsring 59 in Eingriff mit den Klemmschrauben 67 gebracht, so ergibt sich der Bohrvorschub 65 aus der Rotation 66 der Bohrstange 61 durch Ineinanderschrauben der beiden Bohrgehäuseteile 44, 49. Befindet sich der Kupplungsring 59 dagegen außer Eingriff zu den Klemmschrauben 67, so erhält man den Bohrvorschub 65 durch eine unabhängig von der Bohrstangen-Rotation 66 erfolgende Drehung des Kupplungsrings 59, wenn man z.B. in die dort vorgesehenen Radiallöcher Drehstifte einsetzt. Alternativ könnte man schließlich einen zusätzlichen Getriebekasten am Oberende des Anbohrgeräts 60 anordnen, der mit seinem Getriebe-Eingang an der die Klemmschrauben 67 halternden Klemmhülse angreift, während der Getriebeausgang drehfest mit dem Kupplungsring 59 verbunden ist.

Diese Ausführung hat den Vorteil, daß das Bohrgerät 60 mit seinem Schlüsselansatz 64 in eine niedrigere Position kommt, weil es unmittelbar am Rohrstutzen 10 sitzt. Das Gewicht sowohl des Anbohrgeräts 60 als auch des an seinem Stangenende 64 sitzenden Antriebsmittels wird dann, unter Schonung der Kapsel 20 unmittelbar vom Rohrstutzen 10 aufgenommen. Ist die Leitung 11 durchgebohrt, so kann das Druckmedium nur ins Innere des Bohrgehäuses 44 treten, wo es durch die erwähnten Dichtungsmittel gegenüber der Umgebung abgeschirmt. Auf das am Rohrstutzen 10 festsitzende Bohrgerät 60 wird dann die Kapsel 20 mit ihrer aus Fig. 8 ersichtlichen, aber zunächst leeren Büchse 126 aufgesetzt. Das Muffenrohr 19 hat in Fig. 1 eine gegenüber Fig. 2 größere lichte Weite, weshalb der Gehäusebund 45 hindurch paßt. Über die bereits im Zusammenhang mit Fig. 1 beschriebene Kupplung 32 wird dann die Kapsel 20 am Außenumfang des Stutzenkopfes 13 befestigt. Dabei wird ist das Ende der Bohrstange 61 mediendicht im oberen Bereich der Büchse 126 herausgeführt, die dazu foglenden Aufbau hat.

Die Büchse 126 umfaßt zunächst einen Schutzzylinder 127 mit einem Gewindestück am unteren Zylinderende, welches unmittelbar in der Gewindebohrung 28 der Karussellplatte 27 festgeschraubt ist. Am oberen Zylinderende befindet sich eine Deckwand 128, die durch Schraubhülsen 129 eine feste Verbindung mit dem Schutzzylinder 127 herstellt. Die Öffnungen der Schraubhülsen 129 dienen, wie die Radialöffnungen 108 in Fig. 7, zum vorausgehenden Festschrauben der Büchse 126 an der Kapsel 20. Die Bohrstange 61 des Bohrgeräts wird nach dem Bohren axial ganz nach oben gezogen in die aus Fig. 2 ersichtliche, noch näher zu beschreibende Anschlagposition, die durch Festziehen der Klemmschrauben 67 gesichert wird, dabei wird aber in jedem Fall der Kupplungsring 59 in die aus Fig. 2 ersichtliche unwirksame Entkupplungsstellung zu den Klemmschrauben 67 gebracht. Dadurch kann eine Rotation der Bohrstange 61 den Kupplungsring 59 und den drehfest damit verbundenen Gehäuseoberteil 49 nicht mitnehmen. Die zu den Klemmschrauben 67 gehörende Klemmhülse im oberen Abschluß des Bohrgeräts 60 ist über Kugellager frei drehbar gegenüber den beiden Bohrgehäuse-Teilen 49, 44.

Die Deckwand 128 der Büchse 126 hat eine Durchführung 113, durch welche das herausragende Ende der Bohrstange 61 beim Aufsetzen des Kapsel 20 mediendicht hindurchgeführt wird. Gemäß Fig. 8 besitzt auch die Deckwand 128 einen Gewindeansatz, auf welchen eine Schraubkappe 139 mit einem Gummiring 138 aufgeschraubt ist, dessen Bedeutung noch näher beschrieben wird.

Ist die Kapsel 20 mit ihrer zunächst leeren Büchse 126 über das am Rohrstutzen 10 sitzende Bohrgerät 60 gestülpt und am Stutzenkopf 13 angekuppelt worden, so ragt das Betätigungsende 64 der Bohrstange 61 aus der Büchse 126 heraus. Jetzt wird eine Rotation entgegen der Pfeilrichtung 66 auf die Bohrstange 61 ausgeübt, wobei eine besondere Drehmitnahme zwischen dem Unterende 62 der Bohrstange 61 und dem unteren Bohrgehäuse 44 besteht, das zunächst im Stutzenkopf 13 festgeschraubt ist.

Diese Drehmitnahme besteht, wie aus Fig. 2 zu erkennen ist, aus Gewindestiften 136, die in einer Endfläche 135 des Bohrgehäuses 44 sitzen. Das fest mit der Bohrstange 61 verbundene Spannfutter 62 ist seinerseits mit einem Radialflansch 134 versehen, der Radialausbrüche 133 trägt. Ist die Bohrstange 61, gemäß Fig. 2, ganz hochgezogen, so greifen die Gewindestifte 136 in die Radialausbrüche 133 ein und erzeugen somit die erwähnte drehfeste Verbindung. Dadurch wird bei der erwähnten Rotation der Bohrstange 61 das Bohrgehäuse 44 aus dem Stutzenkopf 13 herausgeschraubt. Ist dies geschehen, so wird durch axiales Hochziehen der Bohrstange 61 das Bohrgehäuse 44, 49 in die obere Endstellung gebracht, wo es oberhalb des Kapsel-Unterteils 21 angeordnet ist. Es befindet sich, gemäß Fig. 8, ganz im Inneren der Büchse 126. Das aus dem geöffneten Rohrstutzen 10 ausströmende Druckmedium gelangt zwar in das Büchseninnere 125, kann aber von dort nicht in die Umgebung entweichen, aufgrund der bereits erwähnten mediendichten Durchführung der Bohrstange 61 durch Lippendichtungen od. dgl.. Diese hochgefahrene

Lage des ganzen Geräts 60 gemäß Fig. 8 kann nun leicht dadurch gesichert werden, daß man die Schraubkappe 139 festzieht. Dann preßt sich nämlich der Gummiring 138 gegen den Umfang der Bohrstange 61 und hält diese in der hochgefahrenen Lage in der Büchse 126 fest. Die aus Fig. 8 ersichtliche hochgezogene Position des Bohrgeräts 60 im Büchseninneren 125 ist damit gesichert. Die Kapsel 20 kann dann davon ungestört weitergedreht werden, um beispielsweise das in Fig. 8 gezeigte Ventilsetzgerät 130 wirksam zu setzen. Dieses ist analog zu dem bereits im Zusammenhang mit Fig. 7 beschriebenen Stopfensetzgerät 90 ausgebildet, weshalb es genügt, lediglich auf die Unterschiede einzugehen.

Am unteren Ende der Betätigungsstange 87 von Fig. 8 befindet sich ein Halter 132 für einen Ventileinsatz 140, wie er in der DE-OS 33 34 890 näher beschrieben ist, deren Inhalt zum Gegenstand der vorliegenden Anmeldung gemacht wird. Das Ventilgehäuse dieses Einsatzes 140 soll der Rohrstutzen 10 sein. Demgemäß besitzt der Einsatz 140 eine im unteren Teilstück mit einem Außengewinde 141 ausgerüstete Befestigungshülse 142, wobei das Außengewinde 141 in das bereits mehrfach erwähnte Innengewinde 15 des Rohrstutzens 10 eingeschraubt werden soll. Der obere Bereich der Befestigungshülse 21 und das Betätigungsende des Ventileinsatzes 140 greifen dabei in eine entsprechend groß dimensionierte Kappe 131 des Halters 132 ein, wobei eine kantige Kappenzone 143 einen komplementären kantigen Umfangsbereich, wie einen Sechskant 144 an der Ventilbefestigungshülse 142 aufnimmt. Unterhalb des Sechskants 144 ist eine Einschnürung in der Befestigungshülse 142 vorgesehen, in welche die Hakenenden von bügelförmigen, radialen Federgliedern 109 eingreifen, die bereits im Zusammenhang mit Fig. 7 erwähnt worden sind und im Falle der Fig. 8, in analoger Weise, für die axiale Einstecklage des Ventileinsatzes 140 in der Kappe 131 des Halters 132 sorgen.

Auf diese Weise ist es in einer zum Stopfensetzgerät 90 von Fig. 7 analogen Weise möglich, die Betätigungsstange 87 im Sinne des Pfeils 92 axial einzufahren, wenn aufgrund der entsprechenden Karuselldrehung das Ventilsetzgerät 130 in Ausrichtung mit der Längsmittellinie 18 des in Fig.8 nicht näher gezeigten Rohrstutzens 10 gelangt ist. Für die Mediendichtigkeit sorgt wieder eine bereits beim Anbohrwerkzeug 60 von Fig. 8 erläuterte Büchse 126, deren Schutzzylinder 127 ausreichend groß dimensioniert ist, um die gesamte Kappe 131 mit dem darin aufgenommenen Ventileinsatz 140 zunächst noch nicht aus dem Kappeninneren 23 herausragen zu lassen. Wie schon aus Fig. 8 ersichtlich, befindet sich auch der am Ventilschieber 146 befindliche Ventilteller 23 mitsamt seinen Dichtungen noch innerhalb des Kapselraumes 23.

In Abweichung zur Halterung des Anbohrwerkzeugs 60 besitzt die beim Ventilsetzgerät 130 benutzte Büchse 126 einen gegenüber der vorbeschriebenen Deckwand 128 abgewandelt ausgebildeten Büchsendeckel 111, der mit den bereits im Zusammenhang mit Fig. 7 beim Stopfensetzgerät 90 beschriebenen Bauteilen versehen ist, weshalb insoweit die zugehörige vorausgehende Beschreibung gilt. Allerdings ist dieser Büchsendeckel 111 bei 130 mit den bereits vorausgehend im Zusammenhang mit dem Anbohrgerät 60 von Fig. 8 beschriebenen Schraubhülsen 129 am Schutzzylinder 127 befestigt und mit den aus Fig. 8 ersichtlichen Dichtungen ausgerüstet. Die Montage des Ventileinsatzes 140 erfolgt in analoger Weise zu der vorbeschriebenen Wirkungsweise des Stopfensetzgerätes 90 von Fig. 7, weshalb es genügt, dabei auf folgendes hinzuweisen:

Es wird durch axiale Abwärtsbewegung im Sinne des bereits erwähnten Einfahrpfeils 92 die Betätigungsstange 87 soweit abwärts geschoben, bis der von den Federgliedern 109 festgehaltene Ventileinsatz 140 mit seinem Außengewinde 141 das Innengewinde 15 des in Fig. 4 gezeigten Rohrstutzens 10 berührt. Dann erfolgt die Rotation 94 der Bohrstange 87 und ihres Ventileinsatz-Halters 132, wobei auch im Falle der Fig. 8, gemäß Fig. 7, die Verbindung 120 festgesetzt ist. Aufgrund der Drehmitnahme 143, 144 wird dann der Ventileinsatz 140 im Rohrstutzen 10 eingeschraubt, wobei es wegen der bereits im Zusammenhang mit Fig. 7 beschriebenen axial federnden Kupplung zwischen der Gewindehülse 116 und der Klemmbuchse 121 zu einer axialen Anpassung der beschriebenen Schraubbewegungen kommen kann. Es versteht sich, daß natürlich auch im Falle der Fig. 8 das Gewindestück 114 mit seiner Gewindehülse 116 die gleiche Gewindesteigung aufweist wie die in Eingriff kommenden Gewindegänge 141, 15 zwischen dem Ventileinsatz 140 und dem Rohrstutzen 10.

Der fertig montierte Ventileinsatz 140 ist dann im Kopf 13 des Rohrstutzens 10 festgeschraubt. Dann wird die Betätigungsstange 87, entgegen zum Pfeil 92 von Fig. 8 axial hochgefahren. Die Federglieder 109 geben bei Überschreiten einer bestimmten Grenzkraft die Befestigungshülse 142 dann frei, indem sie aus der Einschnürung federnd ausfahren. Damit ist der axiale Zusammenhalt zwischen dem Ventileinsatz 140 und dem Halter 132 gelöst. Durch weitere Axialbewegung gibt schließlich auch die Halterkappe 131 den Sechskant 144 an der Ventilhülse 142 frei. Die Betätigungsstange 87 kann ganz nach oben gefahren werden, so daß der leere Halter 132 mit seiner Kappe 131 ganz ins Buchseninnere 125 einfährt. Dann hat die Kapsel 20 der erfindungsgemäßen Vorrichtung ihre Aufgabe erfüllt. Der Rohrstutzen ist vom Ventileinsatz 140 verschlossen. Die Kapsel 20 kann durch Lösen der Kupplung mit allen Werkzeugen wieder entfernt werden. Dazu ist es lediglich nötig, die in Fig. 1 gezeigte Überwurfmutter 33 wieder zurückzuschrauben.

Der im Kopf 13 des Rohrstutzens 10 befindliche Ventileinsatz 140 kann dann in seinem äußeren Fugenbereich fest mit dem Rohrkopf 13 verschweißt werden. Die Schweißnaht verschließt dadurch die Ringfuge zwischen der Befestigungshülse 142 und dem Rohrkopf 13. Der Rohrstutzen 10 von Fig. 1 ist dann das Ventilgehäuse. Durch Betätigen der Ventilspindel drückt der Ventilschieber 146 den Ventilteller 145 gegen eine im Inneren des Rohrstutzens 10 dann vorgesehene Ringschulter, die in Fig. 1 unterhalb des Abzweigrohres 12 im Rohrstutzen 10 sich befindet und beispielsweise aus einem dort eingeschweißten Ring bestehen kann. Dann ist über den Ventilteller 145 das an der in Fig. 1 gezeigten Anbohrstelle 16 befindliche Loch zur Rohrleitung 11 verschlossen. Durch Herausdrehen der Ventilspindel hebt sich der Ventilteller von der Ringschulter ab und läßt zunehmend einen Durchgang zwischen der Rohrleitung 11 und dem Abzweigrohr 12 frei, wodurch dann das Medium strömen kann.

Wie aus Fig. 7 zu erkennen ist, kann der obere Gehäuseteil 49 des Bohrgeräts 60 mit einem kleinen Sichtfenster 147 in Form einer Radialbohrung versehen sein, durch welches hindurch die genaue Position des oberen Endes vom unteren Gehäuseteil 44 beobachtet werden kann. Dieses Sichtfenster 147 ist für die Mediendichtigkeit nicht schädlich, weil die Bohrstange 61 durch eine Lippendichtung mediendicht in der Axialbohrung des unteren Gehäuseteils 44 hindurchgeführt ist. Man kann über das Sichtfenster 147 beobachten, ob die beiden Gehäuseteile 44. 49 in einer ausreichend auseinandergeschraubten Ausgangslage gemäß Fig. 7 sich befinden. bevor die Bohrarbeit ausgeführt wird.

Bezugszeichenliste:

10 Rohrstutzen
11 Leitung
12 Abzweigrohr
13 Kopf
14 Radialaussparung in 13
15 Innengewinde von 13
16 Anbohrstelle in 11
17 Schweißverbindung von 10
18 Längsmittellinie von 10
19 Muffenrohr von 20
20 Kapsel
21 Unterteil, Kapsel-Teil
22 Oberteil, Kapsel-Teil
23 Kapselinnenraum
24 Zylinder von 21
25 Zylinder von 22
26 Unterplatte
27 Oberplatte, Karussellplatte
28 Aufnahme, Gewindebohrung
29 Anordnungskreis
30 Drehachse
31 Drehpfeil
32 Rohrkupplung
33 Überwurfmutter
34 Sprengring
35 Außengewinde
36 Radialdurchbruch
37 Innenkonus
38 Innenrinne
39 Lippendichtung
40.40' Kugelkranz, Kugel
41 Laufrinne
42 Deckring
43 Sprengring
44 Bohrgehäuse
45 Bund
46 Dichtring
47 Außengewinde
48 Längsführung
49 Außenhülse
50 Gesperre
51 Stößel
52 Querrippe, Schließhälfte
53 Wendelfeder
54 Innenschulter
55 Bohrung

56 Handgriff
57 Segment
58 Nut, Schließhälfte
59 Kupplungsring
60 Anbohrgerät
61 Bohrstange
62 Spannfutter
63 Schneidwerkzeug
64 Schlüsselansatz
65 Einschub-Pfeil von 61
66 Rotations-Pfeil von 61
67 Klemmschrauben
68 Gehäuseabschluß
69 Anschlußstück
70 Bypass-Leitung
71 Schnellkupplung
72 Ringaufnahme
73 Blasenaufnahmerohr
74 Rohrstange
75 Führungsrohr
76 erste Blase
76' zweite Blase
77 Rohr-Ausbruch von 73
78 Einschub-Pfeil
79 Rohrinneres
80 Blasensetzgerät
81 Gewindetopf
82 Schutzrohr
83 abzusperrendes Rohrteilstück
84 Schrägfläche
85 offenes Rohrteilstück
86 Führungsbüchse
87 Betätigungsstange
88 Stopfenhalter, Magnet
89 Außensechskant
90 Stopfensetzgerät
91 Stopfen
92 Einfahr-Pfeil von 87
93 Gewindestück von 91, Außengewinde
94 Rotations-Pfeil von 87
95 Stopfen-Flansch
96 Klemmkörper, Kugel von 32
97 Verlängerung von 51
98 Axialbohrung
99 Drehungs-Pfeil
100 Flansch
101 Schraubbolzen
102 Gegenflansch
103 Außenfläche von 100
104 Innenfläche von 100
105 Axialfläche
106 Zwischenring
107 Ringinnengewinde
108 Radialöffnung
109 radiales Federglied
110 Büchse
111 Büchsendeckel
112 Lippendichtung

113 Durchführung
114 Gewindestück
115 Stangenachse von 87
116 Gewindehülse
117 Bund
118 Bolzen
119 Druckfeder
120 lösbare Verbindung
121 Klemmbuchse
122 Oberbuchse
123 Radialflansch
124 Durchbruch
125 Büchseninneres
126 Büchse
127 Schutzzylinder
128 Deckwand von 127
129 Schraubhülse
130 Ventilsetzgerät
131 Kappe von 130
132 Halter von 130
133 Randausbruch
134 Radialflansch von 62
135 Endfläche von 44
136 Gewindestift in 44
137 Stirnfläche von 10, 13
138 Gummiring
139 Schraubkappe
140 Ventileinsatz
141 Außengewinde
142 Befestigungshülse
143 Kappenzone
144 Sechskant
145 Ventilteller
146 Ventilschieber
147 Sichtfenster

## Ansprüche

1.) Vorrichtung zur Behandlung, insbesondere zum Anbohren, von vorzugsweise unter Mediendruck stehenden Rohrleitungen (11), wie Gas- oder Wasserleitungen,
bestehend aus einem Rohrstutzen (10) an der Leitung (11),
aus einer am Kopf (13) des Rohrstutzens (10)-ankuppelbaren Halterung
und aus einem an der Halterung angebrachten Montagewerkzeug, wie einem Bohrgerät (60),
dessen Werkzeuggehäuse (44) von einer Betätigungsstange (61) axial durchsetzt ist,
und die Stange (61) an ihrem Innenende einen am Rohrstutzen (10) wirksamen Arbeitsteil, wie ein Schneidwerkzeug (63), aufweist und an ihrem aus dem Werkzeuggehäuse (44) herausragenden Außenende eine Angriffsstelle (64) zu ihrer Rotationsbetätigung besitzt,

**dadurch gekennzeichnet,**
daß die Halterung aus einer zweiteiligen, in sich stets mediendicht geschlossenen Kapsel (20) besteht,
mit einem am Kopf (13) des Rohrstutzens (10) unverdrehbar ankuppelbaren Kapsel-Unterteil (21) einerseits und mit einem exzentrisch zum Rohrstutzen (10) daran drehgelagerten Kapsel-Oberteil(22) andererseits,
daß der Oberteil (22) auf einem konzentrisch zu seiner Drehachse (30) liegenden Kreis (29) mit einem Satz von Montagewerkzeugen (60;80;90;130) bestückt ist, wie einem Bohrgerät (90), einem Blasensetzgerät (80), einem Stopfensetzgerät (90), einem Ventilsetzgerät (130) und dgl.,
und daß der Kapsel-Oberteil (22) mit all seinen Montagewerkzeugen (60;80;90;130) karussellartig zwischen solchen Drehlagen verstellbar ist,
in denen die einzelnen Montagewerkzeuge (60;80;90;130) jeweils mit dem Rohrstutzen (10) ausgerichtet sind.

2.) Vorrichtung nach Anspruch 1, dadurch gekennzeichnet, daß der Kapsel-Oberteil (22) eine Karussellplatte (27) mit mehreren Aufnahmen, insbesondere Gewindebohrungen (28), aufweist,
in denen mediendichte Büchsen (44;68;81;86;106;110;126) sitzen, welche zum Kapselinneren (23) hin offen sind und wenigstens einige von ihnen die einzelnen Montagewerkzeuge (60;80;90;130) beinhalten,
und daß die jeweiligen Arbeitsteile (63;76;88;132) der einzelnen Werkzeuge mittels ihrer mediendicht aus den Büchsen herausragenden Betätigungsstange (61;74;87), wie der Bohrstange (61), durch das Kapselinnere (23) hindurch bis zum Rohrstutzen (10) hindurchführbar sind.

3.) Vorrichtung nach Anspruch 1 oder 2, dadurch gekennzeichnet, daß die an der Karussellplatte (27) angebrachte Büchse das Gerätegehäuse (44) eines Montagewerkzeugs, wie eines Anbohrgeräts (60), ist, welches unmittelbar am Kapsel-Oberteil (22) sitzt,(vergl. Fig. 2).

4.) Vorrichtung nach Anspruch 1 oder 2, dadurch gekennzeichnet, daß die an der Montageplatte (27) angebrachte Büchse ein Zwischenring (106) ist, auf dem das Gehäuse (44) eines Montagewerkzeugs, wie eines Anbohrgeräts (60), montiert ist, (vergl. Fig. 7).

5.) Vorrichtung nach Anspruch 1 oder 2, dadurch gekennzeichnet, daß die an der Karussellplatte (27) angebrachte Büchse ein das Gesamtgehäuse (59,49,44) des Montagewerkzeugs (60) aufnehmender Schutzzylinder (126,127) ist,
und daß die Betätigungsstange (61) zum verschrauben eines Werkzeug-Arbeitsteils am Rohrstutzen (10),wie des Untergehäuses (44) eines Bohrgeräts (60), zwar drehfest (136,133) sowie axial gesichert mit dem Werkzeug-Arbeitsteil (44) verbunden ist, aber axialverschieblich (65) und mediendicht aus dem Schutzzylinder (126,127) herausragt. (vergl. Fig. 8).

6.) Vorrichtung nach Anspruch 5, dadurch gekennzeichnet, daß der Rohrstutzen (10) ein vorzugsweise an seinem Kopf (13) angebrachtes Innengewinde (15) aufweist,
in welches durch Axialverschieben (65) und Rotieren (66) die aus dem Schutzzylinder (126,127) herausragenden Betätigungsstange (61;87) das mit einem komplementären Außengewinde (47;141) ausgerüstete Teilstück des Arbeitsteils (44;140) ein- bzw. ausschraubbar ist.

7.) Vorrichtung nach Anspruch 5 oder 6, dadurch gekennzeichnet, daß bei einem Bohrgerät die drehfeste Verbindung zwischen der Bohrstange (61) und dem als Arbeitsteil fungierenden Gerätegehäuse (44) aus Drehmitnahmen (133) am Stangenunterende (62) und aus durch Axialverschiebung damit kuppelbaren Drehanschlägen (136) am Gerätegehäuse (44) bestehen.

8.) Vorrichtung nach einem oder mehreren der Ansprüche 5 bis 7, dadurch gekennzeichnet, daß die axialfeste Verbindung zwischen der Betätigungsstange (87) und dem Arbeitsteil (91;140) des Montagewerkzeugs (90;130), wie dem Stopfen (91) eines Stopfensetzgeräts (90) oder dem Ventileinsatz (140) eines Ventilsetzgeräts (130), zwar beim axialen Einfahren (92) der Betätigungsstange (87) durch Endanschläge hochbelastbar, aber beim axialen Ausfahren bei Überschreiten einer Grenzkraft lösbar ist.

9.) Vorrichtung nach Anspruch 8, dadurch gekennzeichnet, daß die axialfeste Verbindung über einen Magneten (88) erfolgt, (vergl. Fig. 4).

10.) Vorrichtung nach Anspruch 8 oder 9, dadurch gekennzeichnet, daß die axiale Verbindung durch einen Schnappverschluß erfolgt, wie durch radiale Federglieder (109) an der Betätigungsstange (87) einerseits und dazu komplementären Aussparungen am Arbeitsteil (140) andererseits, (vergl. Fig. 8)

11.) Vorrichtung nach einem oder mehreren der Ansprüche 1 bis 10, dadurch gekennzeichnet, daß die beiden Kapsel-Teile (21,22) jeweils Topfform aufweisen und aus drehfähig ineinandergreifenden Zylindern (24;25) mit einer umlaufenden Lippendichtung (39) und mit jeweils einer Endplatte (26,27) bestehen,
von denen die eine die Karussellplatte mit den diversen Montagewerkzeugen (60;80;90;130) ist, während die andere Endplatte (26) dem Anschluß (32) des Rohrstutzens (10) dient.

12.) Vorrichtung nach einem oder mehreren der Ansprüche 1 bis 11, dadurch gekennzeichnet, daß zwischen den vorzugsweise Axialkräfte aufeinander übertragenden Stützflächen der beiden Kapsel-Teile (21,22) eine Schar von Kugeln (40;40') angeordnet sind.

13.) Vorrichtung nach Anspruch 12, dadurch gekennzeichnet, daß die Kugeln (40) zwischen den ineinandergeschachtelten Zylindern (24,25) der beiden Kapsel-Teile (21,22) angeordnet sind.

14.) Vorrichtung nach einem oder mehreren der Ansprüche 1 bis 13, dadurch gekennzeichnet, daß der eine Kapsel-Teil (Oberteil 22) als Stützfläche mit einem Flansch (100), vorzugsweise einem Außenflansch, versehen ist,
der einerseits auf seiner Außenfläche (103) von einem am anderen Kapsel-Teil (Unterteil 21) sitzenden Gegenflansch (102), vorzugsweise einem Innenflansch, übergriffen wird
und der andererseits, mit seiner Innenfläche (104), auf einer ebenfalls zum anderen Kapselteil (Unterteil 21) gehörenden Axialfläche (105) sich abstützt.

15.) Vorrichtung nach Anspruch 14, dadurch gekennzeichnet, daß sowohl zwischen dem Flansch (100) und Gegenflansch (102) als auch zwischen dem Flansch (100) und der Axialfläche (105) der beiden Kapsel-Teile (22,23) jeweils eine Schar von Kugeln (40') angeordnet ist.

16.) Vorrichtung nach Anspruch 14 oder 15, dadurch gekennzeichnet, daß der Gegenflansch (102) mit seinem Kapsel-Teil (Unterteil 21) lösbar verbunden ist, insbesondere durch Schraubbolzen (101).

17.) Vorrichtung nach einem oder mehreren der Ansprüche 1 bis 16, dadurch gekennzeichnet, daß der Kopf (13) des Rohrstutzens (10) auf seinem Umfang mehrere, voneinander getrennte Radialaussparungen (14) aufweist und das Innenrohr einer Rohrkupplung (32) bildet,
wobei die am Kapsel-Unterteil (21) sitzende Anschlußstelle (19) der Kapsel (20) das Außenrohr dieser Kupplung (32) erzeugt und mit mehreren Radialausbrüchen (36) zur Aufnahme von darin beweglich geführten, mit den Radialaussparungen (14) im Rohrstutzen-Kopf (13) korrespondierenden Klemmkörpern (96), wie Kugeln, versehen ist,
daß eine mit Innengewinde ausgerüstete Überwurfmutter (33) auf dem ein Außengewinde (35) tragenden Außenrohr (19) festschraubbar ist und einen beim Festschrauben gegen die Außenenden der Klemmkörper (96) stoßend auflaufenden, die Innenenden der Klemmkörper (96) jeweils in die einzelnen Radialaussparungen (14) des Rohrstutzens (10) eindrückenden Innenkonus (37) aufweist,
und daß der Kopf (13) des Rohrstutzens (10) mit einem Innengewinde (15) versehen ist.

18.) Vorrichtung nach einem oder mehreren der Ansprüche 1 bis 17, dadurch gekennzeichnet, daß zwischen dem Kapsel-Unter- und -Oberteil (21,22) die beiden Schließhälften (52,58) eines Gesperres (50) angeordnet sind,

welche die werkzeugmäßig ausgerichteten Drehlagen der beiden Kapsel-Teile (21,22) zueinander fixieren.

19.) Vorrichtung nach Anspruch 18, dadurch gekennzeichnet, daß die Schließhälften (52,58) des Gesperres (50) im Bereich der Drehachse (30) der beiden Kapsel-Teile (21, 22) angeordnet sind.

20.) Vorrichtung nach Anspruch 19, dadurch gekennzeichnet, daß die am Kapsel-Oberteil (22) befindliche Schließhälfte des Gesperres (50) aus einem axialbeweglichen, federbelasteten Stößel (51) mit einer stirnseitigen, im Kapselinneren (23) angeordneten Querrippe (52) besteht,

am Kapsel-Unterteil(22), als Gegen-Schließhälfte des Gesperres (50), eine Schar von diametralen Nuten (58) zur wahlweisen Aufnahme der Querrippe (52) vorgesehen ist,

und die Nuten (58) übereinstimmend mit den ausgerichteten Drehlagen der Kapsel-Teile (21,22) angeordnet sind.

21.) Vorrichtung nach einem oder mehreren der Ansprüche 1 bis 20, dadurch gekennzeichnet, daß die das Montagewerkzeug am Kapsel-Oberteil (22) halternde Büchse (110;126) an ihrem Büchsendeckel (111) ein Gewindestück (114) aufweist,

welches koaxial (115) zu der mediendicht herausgeführten Betätigungsstange (87) verläuft

und welches die gleiche Gewindesteigung wie das am Rohrstutzen (10) vorgesehene Innengewinde (15) bzw. das damit in Eingriff kommende Außengewinde (141) am Arbeitsteil (140) des Montagewerkzeugs (130) aufweist,

und daß die herausgeführte Betätigungsstange (87) über eine zeitweise lösbare Verbindung (120) drehfest sowie axialfest mit einer Gewindehülse (116) ist,

die beim Drehen (94) der Betätigungsstange (87) auf das Gewindestück (114) des Buchsendeckels (111) aufschraubbar ist, (vergl. Fig. 8).

22.) Vorrichtung nach Anspruch 21, dadurch gekennzeichnet, daß die drehfeste Verbindung (120, 118,119,124) Kupplungsglieder aufweist,

die einen axialen Versatz zwischen der Betätigungsstange (87) und der Gewindehülse (116) gestatten.

23.) Vorrichtung nach Anspruch 22, dadurch gekennzeichnet, daß die Kupplungsglieder (122,123;117,118) axial federbelastet (119) sind.

24.) Vorrichtung nach Anspruch 22 oder 23, dadurch gekennzeichnet, daß die Kupplungsglieder aus Drehmitnahmen (118,124) zwischen einem Bund (117) an der Gewindehülse (116) einerseits und einem Radialflansch (123) an einer Klemmbuchse (121) andererseits bestehen,

wobei die Klemmbuchse (121) an der Betätigungsstange (87) festsetzbar ist.

25.) Vorrichtung nach Anspruch 24, dadurch gekennzeichnet, daß an der Gewindehülse (116) achsparallel (115) zur Betätigungsstange (87) verlaufende Bolzen (118) sitzen,

die Durchbrüche (124) im Radialflansch (123) der Klemmbuchse (121) durchragen und am Radialflansch (123) sich abstützende Druckfedern (119) tragen.

FIG.1

EP 0 319 882 A1

FIG.2

FIG.3

Manibs

FIG. 4

FIG. 5

Manibs

FIG.6

FIG. 7

Manibs

FIG. 8

Manibs

Europäisches
Patentamt

**EUROPÄISCHER RECHERCHENBERICHT**

Nummer der Anmeldung

EP 88 12 0239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 315 172 (BÄNNINGER GmbH) * Figuren * | 1,2,18 | F 16 L 41/04 |
| A | | 6,11 | |
| | --- | | |
| X | FR-A- 747 136 (R. MARQUETA) * Figuren * | 1,2,18 | |
| A | | 20 | |
| | --- | | |
| A | US-A-2 151 594 (A. GRANTHAM) ----- | | |

| | |
|---|---|
| | RECHERCHIERTE SACHGEBIETE (Int. Cl.4) |
| | F 16 L |

Der vorliegende Recherchenbericht wurde für alle Patentansprüche erstellt

| Recherchenort | Abschlußdatum der Recherche | Prüfer |
|---|---|---|
| DEN HAAG | 20-03-1989 | BARTSCH A.W. |